# FASCICULE DE BREVET EUROPEEN

(11) **EP 1 665 291 B1**
(45) Date de publication et mention de la délivrance du brevet: **02.12.2015**
(21) Numéro de dépôt: 04816129.3
(22) Date de dépôt: 10.09.2004
(51) Int. Cl.: H01B 3/00, C08K 3/00, C09K 21/00

(54) **COMPOSITION ELECTRIQUEMENT ISOLANTE ET THERMIQUEMENT RESISTANTE**
ELEKTRISCH ISOLIERENDE UND THERMISCH RESISTENTE ZUSAMMENSETZUNG
HEAT-RESISTANT, ELECTRICALLY-INSULATING COMPOSITION

(30) Priorité: 12.09.2003 FR 0350531
(43) Date de publication de la demande: 07.06.2006
(73) Titulaire: Nexans, 75008 Paris (FR)
(72) Inventeur: AVRIL, Roland, F-69004 LYON (FR); MAZEL, Christelle, F-69100 LYON (FR)
(74) Mandataire: Feray, Valérie
(86) Numéro de dépôt international: PCT/FR2004/050422
(87) Numéro de publication internationale: WO 2005/027146

(56) Documents cités:
- EP-A- 0 540 467
- EP-A- 1 245 632
- WO-A-98/36022
- GB-A- 2 367 064
- US-B1- 6 569 794
- DATABASE WPI Derwent Publications Ltd., London, GB; AN 1988-067065 XP000050776 & JP 63 020348 A (FUJIKURA CABLE WORKS LTD) 28 janvier 1988 (1988-01-28)
- DATABASE WPI Week 200441 Derwent Publications Ltd., London, GB; AN 2004-433319 XP002316573 & JP 2004 075993 A (FURUKAWA ELECTRIC CO) 11 mars 2004 (2004-03-11)

## Description

La présente invention concerne une composition électriquement isolante qui est en outre en mesure de résister aux conditions thermiques extrêmes.

L'invention trouve une application particulièrement avantageuse, mais non exclusive, dans le domaine des câbles de sécurité, c'est-à-dire des câbles d'énergie ou de télécommunication destinés à rester opérationnels pendant un temps défini lorsqu'ils sont soumis à de fortes chaleurs et/ou directement au feu.

Aujourd'hui, un des enjeux majeurs de l'industrie du câble est l'amélioration du comportement et des performances des câbles dans des conditions thermiques extrêmes, notamment celles rencontrées lors d'un incendie. Pour des raisons essentiellement de sécurité, il est en effet indispensable de maximiser les capacités du câble à retarder la propagation des flammes d'une part, et à résister au feu d'autre part. Un ralentissement significatif de la progression des flammes, c'est autant de temps gagné pour évacuer les lieux et/ou pour mettre en oeuvre des moyens d'extinction appropriés. Une meilleure résistance au feu offre au câble la possibilité de fonctionner plus longtemps, sa dégradation étant moins rapide. Un câble de sécurité se doit en outre de ne pas être dangereux pour son environnement, c'est-à-dire de ne pas dégager de fumées toxiques et/ou trop opaques lorsqu'il est soumis à des conditions thermiques extrêmes.

Qu'il soit électrique ou optique, destiné au transport d'énergie ou à la transmission de données, un câble est schématiquement constitué d'au moins un élément conducteur s'étendant à l'intérieur d'au moins un élément isolant. Il est à noter qu'au moins un des éléments isolants peut également jouer le rôle de moyen de protection et/ou que le câble peut comporter en outre au moins un élément de protection spécifique, formant gaine. Or il est connu que la plupart des matériaux isolants et/ou de protection utilisés dans la câblerie sont malheureusement aussi d'excellentes matières inflammables. Ce qui est parfaitement incompatible avec les impératifs de tenue au feu précédemment évoqués.

Une composition connue de couche isolante susceptible de résister au feu est décrite dans le document de brevet WO 98/43251. Cette composition est remarquable en ce qu'elle comporte un premier composant constitué de caoutchouc de silicone ou d'un monomère ou polymère d'éthylène et de propylène, d'un deuxième composant constitué d'une charge céramique fusible dont la teneur peut atteindre plus de 200 parties en poids pour 100 parties en poids de premier composant, ainsi qu'un troisième composant constitué d'un oxyde réfractaire.

Ce type de composition présente toutefois plusieurs inconvénients significatifs.

Qu'il se présente sous la forme d'un caoutchouc de silicone ou d'un monomère ou polymère d'éthylène et de propylène, le premier composant nécessite un traitement par réticulation peroxyde. Or il est connu que cette technique s'avère économiquement peu satisfaisante dans la mesure où elle requiert un équipement conséquent pour pouvoir travailler sous pression, et qu'elle ne permet pas d'atteindre des vitesses d'extrusion élevées.

Par ailleurs, si la charge céramique fusible permet la formation d'un verre susceptible d'assurer la tenue au feu de l'isolant, il s'avère qu'une teneur trop importante est préjudiciable aux qualités d'isolation électrique en température dudit isolant. En effet, le verre fondu présente des propriétés conductrices en température qui sont d'autant plus importantes que la température est élevée.

Un taux de charge trop important constitue également un inconvénient notable en ce sens qu'il rend difficile l'extrusion et la réticulation de la composition. Il s'avère en effet que des mélanges à haute teneur en charge et en peroxyde conduisent à une composition de viscosité élevée et donc à un auto-échauffement important au cours du mélange des composants. Cette élévation de température est alors de nature à entraîner une décomposition précoce du peroxyde et par conséquent l'apparition d'un phénomène de grillage, la composition se réticulant partiellement dans le mélangeur. Ce phénomène de grillage peut également survenir au cours de l'extrusion par suite d'un auto-échauffement mécanique trop élevé résultant de la haute viscosité de la composition.

On connaît par ailleurs le document EP-1 245 632 qui divulgue une composition à base de polyoléfine résistante au feu. Cette composition comprend une polyoléfine, de préférence 5 à 100 parts en poids de silicate feuilleté, et de 0,1 à 10 parts en poids d'un oxyde métallique. Le problème posé par cette composition réside dans le fait que, lorsqu'elle est utilisée en tant qu'isolation sur un câble électrique, elle ne permet pas d'obtenir un fonctionnement prolongé de ce dernier, ou en d'autres termes, elle n'assure pas l'intégrité électrique du câble en cas d'incendie.

On connaît enfin le document GB-2 367 064, qui fait également état d'une composition à base de polyoléfine résistante au feu. Cette composition comprend une polyoléfine, de préférence 0,01 à 10 parts en poids d'une argile nanocomposite telle que la montmorillonite, et un oxyde métallique dans une proportion d'environ 200 parts en poids. Le problème posé par cette composition réside dans le fait que, lorsqu'elle est utilisée en tant qu'isolation sur un câble électrique, les cendres formées par les charges minérales (y compris l'argile nanocomposite) présentent une cohésion insuffisante conduisant à des chutes de cendres en cas d'incendie, ne permettant donc pas d'assurer l'intégrité mécanique et électrique du câble, c'est-à-dire la poursuite de son fonctionnement en cas d'incendie.

L'invention résout ces problèmes en assurant un compromis optimal entre les propriétés d'isolation électrique, de tenue mécanique et d'isolation thermique de l'isolant. Pour ce faire, elle propose une composition électriquement isolante et thermiquement résistante notamment pour câble de sécurité, caractérisée en ce qu'elle comporte un polymère organique, au moins 15 parts en poids de la composition d'un phyllosilicate et, au moins 50 parts en poids de la composition d'une charge réfractaire.

Les phyllosilicates, qui sont le plus souvent des argiles, sont des composés constitués d'un ensemble de feuillets dont les dimensions individuelles sont de l'ordre du nanomètre en épaisseur et de plusieurs dizaines de nanomètres en longueur. Cette particularité leur confère un coefficient de surface très élevé, de l'ordre de 100 à 1000m²/g, ainsi qu'un très fort facteur de forme puisque le ratio longueur/épaisseur peut atteindre 100.

Les phyllosilicates ont par ailleurs deux importantes caractéristiques interdépendantes: Celle de pouvoir se disperser en particules composées d'un nombre peu élevé de feuillets, pouvant aller jusqu'au feuillet isolé dans certaines conditions, ainsi que celle de pouvoir modifier à volonté leurs propriétés de surface par simple échange cationique.

Ainsi donc, les phyllosilicates ont la capacité d'intercaler entre leurs feuillets des composés organiques tels que des polymères. Concrètement, lorsque les forces de répulsion entre les atomes du composé organique excèdent les forces d'attraction entre les feuillets, il se produit une délamination du matériau en feuillets qui conduit à une structure hybride dans laquelle lesdits feuillets sont dispersés à travers la matrice de composé organique.

Le matériau ainsi obtenu constitue en fait un nanocomposite puisque l'on est en présence de particules de tailles inférieures au micron, dispersées dans une matrice organique. Ce type de structure se caractérise par des interactions internes relativement fortes qui sont de nature à engendrer des propriétés physico-chimiques et des fonctionnalisations différentes de celles de la matrice considérée isolément.

On a découvert de manière surprenante que l'intégrité d'un câble électrique est maintenue en cas d'incendie lorsque l'isolation de ses conducteurs est obtenue à partir d'une composition selon l'invention, comprenant une proportion suffisante à la fois de phyllosilicate et de charge réfractaire, alors que dans les compositions de l'art antérieur, les systèmes comprenaient soient une forte proportion de phyllosilicate et peu de charge réfractaire, soit une forte proportion de charge réfractaire et peu de phyllosilicate.

En tout état de cause, la composition selon l'invention génère une amélioration sensible des propriétés mécaniques, thermiques et de barrière aux gaz, des polymères chargés avec ce type de charges. Cela explique par conséquent les fortes capacités de résistance aux conditions thermiques extrêmes offertes par toute composition électriquement isolante conforme à l'invention.

Selon un mode de réalisation préféré de l'invention, le phyllosilicate est de type organophile.

En effet, les améliorations de propriétés précédemment évoquées sont fortement liées à l'état de dispersion de la charge de phyllosilicate au sein de la matrice polymère. Or le contrôle de cette dispersion passe par la maîtrise des interactions entre les différents feuillets du matériau inorganique et la matrice organique. Il s'avère par conséquent préférable de traiter au préalable la surface du phyllosilicate utilisé afin de lui conférer un caractère plus organophile, et ainsi de permettre au composé organique, en l'occurrence au polymère, de pénétrer facilement entre les feuillets.

A l'échelle moléculaire, un tel traitement peut s'effectuer facilement en substituant aux cations inorganiques hydratables qui sont présents à la surface de chaque feuillet, un tensioactif qui sera généralement un ammonium quaternaire se présentant par exemple sous la forme d'ions alkylammonium. Ce type de tensioactif possède une tête polaire hydrophile qui remplace facilement les cations du phyllosilicate, ainsi qu'une chaîne aliphatique hydrophobe plus ou moins longue qui rend alors le feuillet organophile. Cette modification permet d'augmenter la distance entre les feuillets et ainsi de faciliter la pénétration du polymère.

Il est à noter que le phyllosilicate peut bien entendu être naturel ou synthétique.

De manière particulièrement avantageuse, le taux de phyllosilicate est inférieur ou égal à 50 parties en poids pour 100 parties en poids de polymère organique.

Ce taux est de préférence compris entre 20 et 30, et avantageusement environ égal à 20.

Préférentiellement, le polymère organique est un copolymère comportant au moins de l'éthylène. Bien entendu, comme la composition peut comporter plusieurs polymères organiques différents, l'invention concerne implicitement tout mélange à base d'un copolymère comportant au moins de l'éthylène.

Avantageusement, le polymère organique est un copolymère éthylène-octène. Pour la même raison que précédemment, l'invention est implicitement relative à tout mélange à base de copolymère éthylène-octène.

Le taux de charge réfractaire dans la composition est de préférence compris entre 100 et 200, pour d'une part obtenir l'effet optimal en termes d'intégrité, et d'autre part permettre une mise en oeuvre aisée de la composition selon l'invention en tant qu'isolation sur un câble.

De préférence, la charge réfractaire est choisie parmi l'oxyde de magnésium (MgO), l'oxyde de silicium (SiO₂), l'oxyde d'aluminium (Al₂O₃) et le mica muscovite (6 SiO₂ - 3 Al₂O₃ - K₂O - 2H₂O), ou un mélange quelconque de ces composants, ou encore parmi les précurseurs de ces composants.

Ces précurseurs qui se décomposent en oxyde sous l'action de la chaleur peuvent contribuer au renforcement de l'ignifugation du mélange.

Selon une particularité de l'invention, la composition comporte en outre une charge céramique fusible.

Dans la pratique, cette charge céramique fusible a un point de fusion inférieure à 500°C, de sorte qu'elle est en mesure de se transformer en verre dès lors qu'elle est soumises à des températures plus élevées, ce qui est quasiment systématiquement le cas lors d'un incendie. Dans ces conditions thermiques extrêmes, c'est-à-dire lorsque le polymère a complètement été dégradé, la couche de céramique dure ainsi formée complète alors avantageusement l'action du phyllosilicate en renforçant la tenue mécanique de l'ensemble. Mais elle participe également de manière indirecte au maintien de l'isolation électrique du conducteur, en facilitant la céramisation de la charge réfractaire qui prend alors le relais du polymère en terme d'isolation électrique.

De préférence, la charge céramique fusible est choisie parmi l'oxyde de bore (B₂O₃), les borates de zinc (4ZnO B₂O₃ H₂O ou 2ZnO 3B₂O₃ 3, 5H₂O) et les phosphates de bore (BPO₄) anhydres ou hydratés, ou un mélange quelconque de ces composants.

De manière particulièrement avantageuse, le taux de charge céramique fusible est inférieur ou égal à 50 parties en poids pour 100 parties en poids de polymère.

Selon une autre particularité de l'invention, la composition est avantageusement réalisée par réticulation silane, par exemple par procédé Sioplas.

En effet, bien que la composition puisse être obtenue simplement par mélange thermoplastique, il est cependant préférable qu'elle soit réalisée par réticulation silane dans la mesure où la constitution d'un réseau de liaisons chimiques fortes est de nature à renforcer encore davantage la tenue en température mais aussi mécanique de ladite composition.

Dans cette hypothèse, une réticulation par procédé sioplas sera privilégiée par rapport à une réticulation peroxyde, car elle nécessite un équipement nettement moins important d'une part, et car elle permet des vitesses d'extrusion plus élevées d'autre part. De plus, une telle réticulation n'exerce pas de pression sur le support sur lequel la composition est appliquée dans la mesure où elle est réalisée à la pression atmosphérique ou à très faible pression de vapeur d'eau, contrairement à la réticulation peroxyde qui est effectuée classiquement sous tube vapeur à pression élevée.

Il est à noter que si une charge céramique fusible devait faire partie d'une composition devant être réticulée par technique sioplas, le borate de zinc serait alors le composant le plus approprié pour jouer le rôle de ladite charge.

Selon un premier mode de réalisation spécifique actuellement préféré de l'invention, la composition comporte:
- 100 parties en poids de polymère organique à base au moins de copolymère éthylène-octène,
- 100 à 200 parties en poids d'oxyde de magnésium,
- 15 à 50 parties en poids de phyllosilicate.

Selon un second mode de réalisation spécifique actuellement préféré de l'invention, la composition comporte:
- 100 parties en poids de polymère organique à base au moins de copolymère éthylène-octène,
- 100 à 200 parties en poids de mica muscovite,
- 15 à 50 parties en poids de phyllosilicate.

Il est à noter que dans les deux cas, la proportion de polymère organique correspond à la quantité globale de polymère présente dans la composition, quel que soit le nombre des polymères distincts composant le mélange. Ainsi donc, la proportion de polymère organique peut désigner implicitement soit strictement 100 parties en poids de copolymère éthylène-octène, soit 100 parties en poids d'un mélange à base de copolymère éthylène-octène.

L'invention concerne également tout câble comportant au moins un élément conducteur s'étendant à l'intérieur d'au moins un élément isolant, et dont au moins un élément isolant est constitué d'une composition telle que précédemment décrite.

L'invention est par ailleurs relative à tout câble comportant au moins un élément conducteur revêtu d'une couche isolante interne et d'une couche isolante externe, ladite couche isolante interne étant constituée d'une composition selon le premier mode de réalisation spécifique et ladite couche isolante externe étant constituée d'une composition selon le second mode de réalisation spécifique. Le câble en question bénéficie donc d'une isolation bicouche. L'ensemble est agencé de manière à ce qu'en cas de conditions thermiques extrêmes, la couche isolante interne assure plus spécifiquement l'isolation électrique de l'élément conducteur avec qui elle est directement en contact, tandis que la couche isolante externe garantit plus particulièrement la tenue mécanique globale dudit câble.

D'autres caractéristiques et avantages de la présente invention apparaîtront au cours de la description d'exemples qui va suivre ; lesdits exemples étant donnés à titre illustratif et nullement limitatif.

Le tableau 1 ci-après illustre les résultats surprenants obtenus à l'aide d'une composition selon l'invention, et notamment l'influence du taux de phyllosilicate sur l'intégrité d'un câble électrique utilisant une composition selon l'invention.

**Tableau 1**

| Taux de phyllosilicate (pcr) | Durée de maintien de l'intégrité dans un essai de résistance au feu type EN 50200 (T°flamme = 830°C, U=500 V) | Conformité du câble selon EN 50200 |
|---|---|---|
| 0 | Inférieure à 5 minutes | Non conforme |
| 5 | 5 à 7 minutes | Non conforme |
| 10 | 6 à 10 minutes | Non conforme |
| 15 | Supérieure à 15 minutes | Conforme |
| 20 | Supérieure à 60 minutes | Conforme |
| 25 | Supérieure à 60 minutes | Conforme |
| 30 | Supérieure à 60 minutes | Conforme |

Où pcr représente les parties en poids pour 100 parties de résine et U la tension électrique entre phases.

Le Tableau 1 ci-dessus montre bien que l'intégrité électrique d'un câble électrique dont l'isolation contient, toutes concentrations égales par ailleurs et conformes à la présente invention, au moins de 15 parts en poids de phylosillicate, est maintenue de manière surprenante, alors qu'elle ne l'est pas en-dessous de 15.

Les exemples 1 à 5 concernent plus particulièrement des compositions destinées à servir de couches isolantes à des câbles d'énergie et/ou de télécommunication.

### Exemple 1

Le tableau 2 détaille les proportions respectives des différents constituants d'une composition intermédiaire (formule A) qui est destinée à l'élaboration de deux compositions électriquement résistantes et thermiquement résistantes.

**Tableau 2**

| | |
|---|---|
| Formule A | - 75 pcr de copolymère éthylène - octène |
| | - 25 pcr de copolymère éthylène - ester acrylique |
| | - 100 à 200 pcr de mica muscovite |
| | - 0 à 60 pcr de trihydrate d'aluminium ou de dihydrate de magnésium |
| | - 5 à 15 pcr cire |
| | - 0 à 5 pcr d'oxyde de zinc |
| | - 2 à 15 pcr de silane |
| | - 2 à 5 pcr d'antioxydant |
| | - 5 à 15 pcr d'agent de réticulation |

Où pcr représente les parties en poids pour 100 parties de résine.

La composition 1 définie dans le Tableau 3 ci-dessous correspond à une composition typique de l'art antérieur puisqu'elle associe à une matrice polymère et à une charge réfractaire, une charge céramique fusible constituée dans cet exemple par du borate de zinc. La composition 2 définie dans le Tableau 3 ci-dessous est quant à elle conforme à l'invention en raison du fait qu'elle associe à une matrice polymère et à une charge réfractaire, une charge de phyllosilicate qui est présente en proportion identique.

Conformément au tableau 3, des essais ont été menés pour évaluer la cohésion des cendres lorsque de telles compositions sont soumises à des températures élevées croissantes.

**Tableau 3**

| Température | Composition 1 Formule A + 20 pcr de borate de zinc | Composition 2 Formule A + 20 pcr de phyllosilicate |
|---|---|---|
| 400°C | pas de cohésion cendres noires | pas de cohésion cendres noires |
| 500°C | pas de cohésion cendres grises | amorce de cohésion cendres gris foncé |
| 600°C | amorce de cohésion cendres grises | faible cohésion cendres gris foncé |
| 700°C | faible cohésion cendres blanches | forte cohésion cendres grises |
| 800°C | forte cohésion cendres blanches | cohésion cendres blanches |

On observe très clairement que la présence de phyllosilicate en lieu et place de la charge céramique fusible permet d'augmenter notablement la cohésion des cendres, et ce dans une large gamme de températures. D'un point de vue mécanique, la tenue au feu d'un isolant constitué d'une composition selon l'invention s'en trouve par conséquent significativement améliorée.

Des essais ont par ailleurs été conduits pour déterminer les capacités d'isolation électrique à haute température des compositions 1 et 2 précédemment décrites. A cet égard, le test standardisé CEI 60331 met en évidence que la composition 2 donne de bien meilleurs résultats que la composition 1, et ce d'autant plus que les tensions appliquées sont importantes.

Au final, il s'avère que la composition 2 reste isolante électriquement et thermiquement résistante sur une large plage de températures allant de la température ambiante aux environs de 1100°C.

### Exemples 2 à 5

A titre indicatif sont précisés ci-après d'autres exemples de compositions conformes à l'invention. Les exemples 2 et 3 regroupés dans le tableau 3 concernent des compositions à base de mica comme charge réfractaire, tandis que les exemples 4 et 5 du tableau 4 sont plus particulièrement relatives à des compositions à base d'oxyde de magnésium comme charge réfractaire.

On remarque notamment que le phyllosilicate ne constitue jamais la charge majoritaire, rôle systématiquement tenu par la charge réfractaire.

**Tableau 3**

| | |
|---|---|
| Exemple 2 | - 55 pcr de copolymère éthylène - octène |
| | - 25 pcr de terpolymère éthylène - propylène-diène |
| | - 20 pcr de copolymère éthylène - ester acrylique |
| | - 100 à 200 pcr de mica |
| | - 15 à 50 pcr de phyllosilicate |
| | - 0 à 60 pcr de trihydrate d'aluminium ou de dihydrate de magnésium |
| | - 5 à 15 pcr de cire |
| | - 0 à 5 pcr d'oxyde de zinc |
| | - 2 à 15 pcr de silane |
| | - 2 à 5 pcr d'antioxydant |
| | - 0 à 15 pcr d'agent de réticulation |
| Exemple 3 | - 75 pcr de copolymère éthylène - octène |
| | - 25 pcr de copolymère éthylène - ester acrylique |
| | - 100 à 200 pcr de mica |
| | - 15 à 50 pcr de phyllosilicate |
| | - 0 à 60 pcr de trihydrate d'aluminium ou de dihydrate de magnésium |
| | - 5 à 15 pcr de cire |
| | - 0 à 5 pcr d'oxyde de zinc |
| | - 2 à 15 pcr de silane |
| | - 2 à 5 pcr d'antioxydant |
| | - 5 à 15 pcr d'agent de réticulation |

Où pcr représente les parties en poids pour 100 parties de résine.

**Tableau 4**

| | |
|---|---|
| Exemple 4 | - 75 pcr de copolymère éthylène - octène |
| | - 25 pcr de copolymère éthylène - ester acrylique |
| | - 100 à 200 pcr d'oxyde de magnésium |
| | - 15 à 50 pcr de phyllosilicate |
| | - 0 à 60 pcr de trihydrate d'aluminium ou de dihydrate de magnésium |
| | - 5 à 20 pcr de cire |
| | - 2 à 15 pcr de silane |
| | - 2 à 5 pcr d'antioxydant |
| | - 0 à 15 pcr d'agent de réticulation |
| Exemple 5 | - 75 pcr de copolymère éthylène - octène |
| | - 10 pcr de copolymère éthylène - ester acrylique |
| | - 15 pcr de terpolymère éthylène - propylène-diène |
| | - 100 à 200 pcr d'oxyde de magnésium |
| | - 15 à 50 pcr de phyllosilicate |
| | - 0 à 60 pcr de trihydrate d'aluminium ou de dihydrate de magnésium |
| | - 5 à 20 pcr de cire |
| | - 2 à 15 pcr de silane |
| | - 2 à 5 pcr d'antioxydant |
| | - 0 à 15 pcr d'agent de réticulation |

Où pcr représente les parties en poids pour 100 parties de résine.

## Revendications

1. Câble comportant au moins un élément conducteur s'étendant à l'intérieur d'au moins un élément isolant, **caractérisé en ce qu'**au moins un élément isolant est constitué d'une composition électriquement isolante et thermiquement résistante, **caractérisée en ce qu'**elle comporte :
- un polymère organique,
- au moins 15 parts en poids d'un phyllosilicate pour 100 parties en poids de polymère organique, le phyllosilicate étant constitué d'un ensemble de feuillets et ayant la capacité d'intercaler le polymère organique entre lesdits feuillets, et
- au moins 50 parts en poids d'une charge réfractaire du type oxyde réfractaire pour 100 parties en poids de polymère organique,
ledit élément isolant comprenant ledit polymère organique intercalé entre lesdits feuillets.

2. Câble selon la revendication 1, **caractérisée en ce que** le phyllosilicate est de type organophile.

3. Câble selon l'une des revendications 1 ou 2, **caractérisée en ce que** le phyllosilicate est traité par un ion alkylammonium.

4. Câble selon l'une quelconque des revendications 1 à 3, **caractérisée en ce que** le taux de phyllosilicate est inférieur ou égal à 50 parties en poids pour 100 parties en poids de polymère organique, et de préférence compris entre 20 et 30 parties en poids pour 100 parties en poids de polymère organique, et de préférence encore environ égal à 20 parties en poids pour 100 parties en poids de polymère organique.

5. Câble selon l'une quelconque des revendications 1 à 4, **caractérisée en ce que** le polymère organique est un copolymère comportant au moins de l'éthylène.

6. Câble selon l'une quelconque des revendications 1 à 5, **caractérisée en ce que** le polymère organique est un copolymère éthylène-octène.

7. Câble selon l'une des revendications 1 à 6 **caractérisée en ce que** le taux de charge réfractaire est d'au plus 200 parties en poids pour 100 parties en poids de polymère organique.

8. Câble selon l'une quelconque des revendications 1 à 7, **caractérisée en ce que** la charge réfractaire est choisie parmi l'oxyde de magnésium, l'oxyde de silicium, l'oxyde d'aluminium et le mica muscovite, et un quelconque mélange de ces composants.

9. Câble selon l'une quelconque des revendications 1 à 8, **caractérisée en ce que** la composition comporte en outre une charge céramique fusible.

10. Câble selon la revendication 9, **caractérisée en ce que** la charge céramique fusible est choisie parmi l'oxyde de bore, les borates de zinc et les phosphates de bore, ou un quelconque mélange de ces composants.

11. Câble selon l'une des revendications 9 ou 10, **caractérisée en ce que** le taux de charge céramique fusible est inférieur ou égal à 50 parties en poids pour 100 parties en poids de polymère.

12. Câble selon l'une quelconque des revendications 1 à 11, **caractérisée en ce que** la composition est réalisée par réticulation silane.

13. Câble selon l'une quelconque des revendications 1 à 12, **caractérisée en ce que** le phyllosilicate est une argile.

14. Câble selon l'une quelconque des revendications 1 à 13, **caractérisée en ce que** le coefficient de surface des feuillets est de l'ordre de 100 à 1000 m²/g.

15. Câble selon l'une quelconque des revendications 1 à 14, **caractérisée en ce que** le phyllosilicate dispersé dans le polymère organique forme un nanocomposite.

16. Câble selon l'une quelconque des revendications 1 à 15, **caractérisée en ce que** la composition comporte:
- 100 parties en poids de polymère organique à base au moins de copolymère éthylène-octène,
- 100 à 200 parties en poids d'oxyde de magnésium en tant que charge réfractaire, pour 100 parties en poids de polymère organique, et
- 15 à 50 parties en poids de phyllosilicate pour 100 parties en poids de polymère organique.

17. Composition selon l'une quelconque des revendications 1 à 15, **caractérisée en ce que** la composition comporte:
- 100 parties en poids de polymère organique à base au moins de copolymère éthylène-octène,
- 100 à 200 parties en poids de mica muscovite en tant que charge réfractaire, pour 100 parties en poids de polymère organique,
- 15 à 50 parties en poids de phyllosilicate pour 100 parties en poids de polymère organique.

18. Câble comportant au moins un élément conducteur revêtu d'une couche isolante interne et d'une couche isolante externe, **caractérisé en ce que** ladite couche isolante interne est constituée d'une composition selon la revendication 12 et **en ce que** ladite couche isolante externe est constituée d'une composition selon la revendication 1.

## Patentansprüche

1. Kabel, das mindestens ein leitendes Element aufweist, das sich im Innern von mindestens einem isolierenden Element erstreckt, **dadurch gekennzeichnet, dass** mindestens ein isolierendes Element von einer elektrisch isolierenden und wärmeresistenten Zusammensetzung gebildet ist, **dadurch gekennzeichnet, dass** sie aufweist:
- ein organisches Polymer,
- mindestens 15 Gewichtsanteile eines Phyllosilikats auf 100 Gewichtsanteile des organischen Polymers, wobei das Phyllosilikat von einer Gruppe von Schichten gebildet ist und die Fähigkeit hat, das organische Polymer zwischen den Schichten anzuordnen, und
- mindestens 50 Gewichtsanteile einer refraktären Last vom Typ refraktäres Oxid auf 100 Gewichtsanteile des organischen Polymers,
wobei das isolierende Element das zwischen den Schichten angeordnete organische Polymer umfasst.

2. Kabel nach Anspruch 1, **dadurch gekennzeichnet, dass** das Phyllosilikat vom organophilen Typ ist.

3. Kabel nach einem der Ansprüche 1 oder 2, **dadurch gekennzeichnet, dass** das Phyllosilikat von einem Alkylammoniumion behandelt ist.

4. Kabel nach einem der Ansprüche 1 bis 3, **dadurch gekennzeichnet, dass** der Gehalt des Phyllosilikats unter oder gleich 50 Gewichtsanteile auf 100 Gewichtsanteile des organischen Polymers und vorzugsweise zwischen 20 und 30 Gewichtsanteile inklusive auf 100 Gewichtsanteile des organischen Polymers und noch vorzugsweiser zirka gleich 20 Gewichtsanteile auf 100 Gewichtsanteile des organischen Polymers beträgt.

5. Kabel nach einem der Ansprüche 1 bis 4, **dadurch gekennzeichnet, dass** das organische Polymer ein Copolymer ist, das mindestens Ethylen aufweist.

6. Kabel nach einem der Ansprüche 1 bis 5, **dadurch gekennzeichnet, dass** das organische Polymer ein Ethylen-octen-Copolymer ist.

7. Kabel nach einem der Ansprüche 1 bis 6, **dadurch gekennzeichnet, dass** der Gehalt der refraktären Last höchsten 200 Gewichtsanteile auf 100 Gewichtsanteile des organischen Polymers beträgt.

8. Kabel nach einem der Ansprüche 1 bis 7, **dadurch gekennzeichnet, dass** die refraktäre Last aus dem Magnesiumoxid, dem Siliziumoxid, dem Aluminiumoxid und dem Mica-Muscovit und einem Gemisch dieser Bestandteile ausgewählt ist.

9. Kabel nach einem der Ansprüche 1 bis 8, **dadurch gekennzeichnet, dass** die Zusammensetzung ferner eine schmelzbare keramische Last aufweist.

10. Kabel nach Anspruch 9, **dadurch gekennzeichnet, dass** die schmelzbare keramische Last aus dem Boroxid, den Zinkboraten und den Borphosphaten oder einem Gemisch dieser Bestandteile ausgewählt ist.

11. Kabel nach einem der Ansprüche 9 oder 10, **dadurch gekennzeichnet, dass** der Gehalt der schmelzbaren keramischen Last kleiner oder gleich 50 Gewichtsanteile auf 100 Gewichtsanteile des Polymers ist.

12. Kabel nach einem der Ansprüche 1 bis 11, **dadurch gekennzeichnet, dass** die Zusammensetzung durch Silanvernetzung hergestellt ist.

13. Kabel nach einem der Ansprüche 1 bis 12, **dadurch gekennzeichnet, dass** das Phyllosilikat ein Ton ist.

14. Kabel nach einem der Ansprüche 1 bis 13, **dadurch gekennzeichnet, dass** der Oberflächenkoeffizient der Schichten zirka 100 bis 1000 m²/g beträgt.

15. Kabel nach einem der Ansprüche 1 bis 14, **dadurch gekennzeichnet, dass** das in dem organischen Polymer verteilte Phyllosilikat einen Nanoverbundstoff bildet.

16. Kabel nach einem der Ansprüche 1 bis 15, **dadurch gekennzeichnet, dass** die Zusammensetzung aufweist:
- 100 Gewichtsanteile organisches Polymer auf der Basis von mindestens Ethylen-octen-Copolymer,
- 100 bis 200 Gewichtsanteile Magnesiumoxid als refraktäre Last auf 100 Gewichtsanteile des organischen Polymers, und
- 15 bis 50 Gewichtsanteile Phyllosilikat auf 100 Gewichtsanteile des organischen Polymers.

17. Zusammensetzung nach einem der Ansprüche 1 bis 15, **dadurch gekennzeichnet, dass** die Zusammensetzung aufweist:
- 100 Gewichtsanteile organisches Polymer auf der Basis von mindestens Ethylen-octen-Copolymer,
- 100 bis 200 Gewichtsanteile Mica-Muscovit als refraktäre Last auf 100 Gewichtsanteile des organischen Polymers, und
- 15 bis 50 Gewichtsanteile Phyllosilikat auf 100 Gewichtsanteile des organischen Polymers.

18. Kabel, das mindestens ein von einer inneren Isolationsschicht und einer äußeren Isolationsschicht bedecktes leitendes Element aufweist, **dadurch gekennzeichnet, dass** die innere Isolationsschicht von einer Zusammensetzung nach Anspruch 12 gebildet ist und dass die äußere Isolationsschicht aus einer Zusammensetzung nach Anspruch 1 besteht.

## Claims

1. A cable including at least one conductive element extending inside at least one insulating element, **characterized in that** at least one insulating element consists of an electrically insulating and thermally resistant composition, **characterized in that** it includes:
- an organic polymer,
- at least 15 parts by weight of a phyllosilicate for 100 parts by weight of organic polymer, the phyllosilicate consisting of an assembly of sheets and having the capability of inserting the organic polymer between said sheets, and
- at least a 50 parts by weight of a refractory filler of the refractory oxide type for 100 parts by weight of organic polymer,
said insulating element comprising said organic polymer inserted between said sheets.

2. The cable according to claim 1, **characterized in that** the phyllosilicate is of the organophilic type.

3. The cable according to one of claims 1 or 2, **characterized in that** the phyllosilicate is treated with an alkylammonium ion.

4. The cable according to any of claims 1 to 3, **characterized in that** the phyllosilicate level is less than or equal to 50 parts by weight for 100 parts by weight of organic polymer, and preferably comprised between 20 and 30 parts by weight for 100 parts by weight of organic polymer, and still preferably about equal to 20 parts by weight for 100 parts by weight of organic polymer.

5. The cable according to any of claims 1 to 4, **characterized in that** the organic polymer is a copolymer including at least ethylene.

6. The cable according to any of claims 1 to 5, **characterized in that** the organic polymer is an ethylene-octene copolymer.

7. The cable according to one of claims 1 to 6, **characterized in that** the refractory filler level is at most 200 parts by weight for 100 parts by weight of organic polymer.

8. The cable according to any of claims 1 to 7, **characterized in that** the refractory filler is selected from among magnesium oxide, silicon oxide, aluminium oxide and muscovite mica, and any mixture of these components.

9. The cable according to any of claims 1 to 8, **characterized in that** the composition further includes a meltable ceramic filler.

10. The cable according to claim 9, **characterized in that** the meltable ceramic filler is selected from among boron oxide, zinc borates and boron phosphates or any mixture of these components.

11. The cable according to one of claims 9 or 10, **characterized in that** the meltable ceramic filler level is less than or equal to 50 parts by weight for 100 parts by weight of polymer.

12. The cable according to any of claims 1 to 11, **characterized in that** the composition is produced by silane cross-linking.

13. The cable according to any of claims 1 to 12, **characterized in that** the phyllosilicate is a clay.

14. The cable according to any of claims 1 to 13, **characterized in that** the surface coefficient of the sheets is of the order of 100 to 1,000 m²/g.

15. The cable according to any of claims 1 to 14, **characterized in that** the phyllosilicate dispersed in the organic polymer forms a nanocomposite.

16. The cable according to any of claims 1 to 15, **characterized in that** the composition includes:
- 100 parts by weight of organic polymer at least based on an ethylene-octene copolymer,
- 100 to 200 parts by weight of magnesium oxide as a refractory filler, for 100 parts by weight of organic polymer, and
- 15 to 50 parts by weight of phyllosilicate for 100 parts by weight of organic polymer.

17. The composition according to any of claims 1 to 15, **characterized in that** the composition includes:
- 100 parts by weight of organic polymer at least based on an ethylene-octene copolymer,
- 100 to 200 parts by weight of magnesium oxide as a refractory filler, for 100 parts by weight of organic polymer, and
- 15 to 50 parts by weight of phyllosilicate for 100 parts by weight of organic polymer.

18. A cable including at least one conductive element coated with an internal insulating layer and with an external insulating layer, **characterized in that** said internal insulating layer consists of a composition according to claim 12 and **in that** said external insulating layer consists of a composition according to claim 1.
